# FASCICULE DE BREVET EUROPEEN

(11) **EP 3 893 305 B1**
(45) Date de publication et mention de la délivrance du brevet: **16.11.2022**
(21) Numéro de dépôt: 21160645.4
(22) Date de dépôt: 04.03.2021
(51) Int. Cl.: H01M 8/04082, H01M 8/04007, H01M 8/04089, H01M 8/04746

(54) **INSTALLATION ET PROCÉDÉ D'APPROVISIONNEMENT EN HYDROGÈNE D'UNE PILE À COMBUSTIBLE**
ANLAGE UND VERFAHREN ZUR VERSORGUNG EINER BRENNSTOFFZELLE MIT WASSERSTOFF
INSTALLATION AND METHOD FOR SUPPLYING A FUEL CELL WITH HYDROGEN

(30) Priorité: 25.03.2020 FR 2002892
(43) Date de publication de la demande: 13.10.2021
(73) Titulaire: L'Air Liquide, société anonyme pour l'Étude et l'Exploitation des procédés Georges Claude, 75007 Paris (FR)
(72) Inventeur: ALLIDIERES, Laurent, 75321 PARIS (FR)
(74) Mandataire: Air Liquide

(56) Documents cités:
- CN-A- 108 123 163
- US-A1- 2002 177 023
- US-A1- 2006 199 064
- US-A1- 2012 240 599

## Description

L'invention concerne une installation et un procédé d'approvisionnement en hydrogène d'une pile à combustible L'invention concerne plus particulièrement une installation d'approvisionnement en hydrogène d'une pile à combustible, l'installation comprenant une pile à combustible, un stockage d'hydrogène liquéfié et un circuit d'approvisionnement comprenant au moins une extrémité amont reliée au stockage et une extrémité aval reliée à une entrée de carburant de la pile à combustible, le circuit d'approvisionnement comprenant au moins un système de réchauffage de l'hydrogène par échange de chaleur avec une source chaude et un ensemble de vannes de contrôle, le stockage d'hydrogène liquéfié étant configuré pour conserver de l'hydrogène liquéfié en équilibre avec une phase gazeuse à une pression de stockage nominale déterminée comprise entre 1,5 et 4,5 bar.

Les piles à combustible fonctionnent avec une pression d'hydrogène à l'anode de quelques centaines de millibar. Les fabricants de piles à combustible spécifient cependant dans la plupart des cas des pressions de l'ordre de 5 bar à 10 bar à leur limite de fourniture. Ceci permet de prévoir ce niveau de pression en aval du dernier étage de détente avant l'entrée de l'anode. Cette pression en amont de l'entrée de la pile permet d'avoir un poumon gazeux (ou réserve de gaz sous pression) pour gérer l'arrêt de la pile en cas d'arrêt inopiné de la fourniture en hydrogène. En effet si la fourniture d'hydrogène est brutalement arrêtée alors que la demande en courant est toujours présente, sans cette réserve d'hydrogène sous pression, l'hydrogène présent à l'anode serait consommé, ce qui entraînerait une pression relative négative à cette interface. Ceci peut endommager l'assemblage membrane électrode de la pile (par inversion de pression vis à vis de la cathode et potentiellement une mise sous vide de l'anode).

Dans le cas d'une alimentation en hydrogène avec des stockages gazeux sous pression (350/700 bar), il y a souvent une limite basse d'utilisation des réservoirs fixée entre 10 et 20 bar (par exemple pour éviter d'endommager la structure composite des réservoirs de type 4 à liner polymère, ou pour éviter d'atteindre une pression trop proche de la pression atmosphérique dans le réservoir qui serait propice à une entrée d'humidité ou d'air). Ce niveau bas de pression est compatible la spécification de réserve de 5 à 10 bar précitée.

Dans d'autres configurations, l'hydrogène est fourni par un stockage cryogénique d'hydrogène liquide.

Les stockage d'hydrogène liquide sont généralement maintenus pression relativement basse pour plusieurs raisons. Un tel réservoir s'auto-pressurise naturellement via les entrées thermiques (isolation, tuyauteries, supports) lorsque qu'aucun débit de produit n'est soutiré. Il y a donc intérêt à stocker le fluide à la plus basse pression possible afin de conserver un écart de pression le plus élevé possible entre la pression d'utilisation et la pression de tarage de la soupape ; En effet, ceci permet d'augmenter l'autonomie du stockage (durée allongée avant qu'une soupape de surpression ne s'ouvre).

De plus, l'hydrogène liquide se dilate lorsque sa pression de saturation liquide/gaz augmente. Un ciel gazeux de l'ordre de 5% (en mol) doit être conservé à l'ouverture de la soupape. Ainsi, plus un stockage a une ouverture de soupape à une pression élevée, moins on pourra le remplir à sa pression (relativement faible) de remplissage.

Enfin, la chaleur latente de vaporisation de l'hydrogène est une fonction décroissante de la pression de saturation liquide/vapeur. La vitesse de montée en pression en phase d'auto-pressurisation étant proportionnelle à l'inverse de cette chaleur latente, un stockage cryogénique monte d'autant plus vite en pression que cette pression est élevée (courbe de montée en auto-pressurisation convexe).

Dans le cas où les piles à combustible fonctionnent à haute pression (par exemple à 6 bar) et que le réservoir d'hydrogène qui alimente la pile est un stockage liquide à basse pression (par exemple 2.5 bar abs), il faut, préalablement, au démarrage de la pile, auto-pressuriser le stockage. Cette auto-pressurisation peut consister à prélever du liquide du stockage qui est évaporé et réinjecté dans la phase gazeuse du stockage. Ceci entraîne un écart à l'équilibre thermodynamique du stockage via une stratification en température du ciel gazeux.

Si le réservoir est embarqué à bord d'un train ou d'un bateau, le ciel gazeux se condensera au premier choc (ou vague) et le réservoir retournera à sa pression d'équilibre qui pourrait se situer sous la pression minimale d'utilisation de la pile à combustible. Dans cette configuration, afin de garantir un fonctionnement optimum des piles, il faut théoriquement disposer deux réservoirs tampon liquides maintenus saturés entre le réservoir principal et la pile à combustible. Un réservoir est rempli et pressurisé alors que l'autre alimente la pile à combustible. Le réservoir a un volume suffisant pour que le réservoir pressurisé soit à sa pression d'équilibre lorsque qu'il est connecté à la pile. Un tel dispositif permet d'alimenter la pile en hydrogène à une pression suffisante. Ceci a comme inconvénient de nécessiter deux réservoirs cryogéniques supplémentaires et une consommation d'hydrogène supérieure, le réservoir intermédiaire vide devant être rempli et chaud et à haute pression et doit être refroidi et dé-pressurisé pour être à nouveau rempli en hydrogène liquide.

Une spécification de l'hydrogène à 5 bar pour une utilisation pile à combustible à partir d'un stockage liquide pénalise donc le taux de remplissage du stockage et son autonomie.

Pour toutes ces raisons, il y a plutôt intérêt à limiter la pression d'utilisation de l'hydrogène en sortie du stockage à une pression de l'ordre de 2.5 à 3.5 bar abs, largement inférieur aux 5 bars spécifiés par les fabricants de pile à combustible.

US 2006/199064 A1, CN 108123163 A et US 2012/240599 A1 décrivent des systèmes de piles à combustible qui sont alimentés en hydrogène à partir d'un réservoir d'hydrogène liquéfié.

Un but de la présente invention est de pallier tout ou partie des inconvénients de l'art antérieur relevés ci-dessus.

A cette fin, l'installation selon l'invention, par ailleurs conforme à la définition générique qu'en donne le préambule ci-dessus, est essentiellement caractérisée en ce que le circuit d'approvisionnement comporte un réservoir tampon d'hydrogène gazeux sous pression configuré pour stocker de l'hydrogène soutiré du stockage et réchauffé par le système de réchauffage, l'ensemble de vannes étant configuré pour accumuler du gaz sous pression dans le réservoir tampon à une pression de stockage déterminée comprise entre 4 et 100 bar, par exemple entre 6 et 8 bar.

L'invention permet ainsi d'opérer un stockage d'hydrogène liquide à relativement basse pression tout en maintenant une réserve d'hydrogène à plus haute pression nécessaire pour pouvoir assurer l'arrêt en sécurité de la pile à combustible en cas de coupure inopinée de l'alimentation du stockage liquide. Cette réserve d'hydrogène gazeux sous pression peut être automatiquement régénérée lors des phases de vie du stockage liquide notamment lors des phases d'auto-presssurisation, c'est à dire lorsque la pile est arrêtée et le stockage monte naturellement en pression du fait des entrées de chaleur.

Par ailleurs, des modes de réalisation de l'invention peuvent comporter l'une ou plusieurs des caractéristiques suivantes :
- le circuit d'approvisionnement comprend une conduite de soutirage de liquide reliant la partie inférieure du stockage à l'entrée de carburant de la pile à combustible, la conduite de soutirage de liquide comprenant, disposés en série : un premier échangeur de chaleur de réchauffage, un premier régulateur de pression et/ou de débit, ledit une première vanne de régulation de pression et/ou de débit étant configurée pour alimenter l'entrée de carburant de la pile à combustible à une pression d'utilisation déterminée comprise entre 1 et 3 bar,
- le circuit comprend une conduite de soutirage de gaz reliant la partie supérieure du stockage à une entrée du réservoir tampon,
- la conduite de soutirage de gaz comprend, disposés en série : un échangeur de chaleur de réchauffage de l'hydrogène gazeux, une vanne de régulation de pression et/ou de débit, ladite vanne de régulation de pression et/ou de débit étant configurée pour transférer dans le réservoir tampon du gaz à la pression de stockage,
- la vanne de régulation de pression et/ou de débit est configurée pour transférer de façon automatique du gaz du stockage vers le réservoir tampon et uniquement lorsque la pression dans le stockage excède un seuil de pression déterminé,
- le circuit comprend une conduite de remplissage de gaz ayant une extrémité amont raccordée à une sortie du premier échangeur de chaleur de réchauffage et une extrémité aval reliée à une entrée du réservoir tampon, la conduite de remplissage de gaz comprenant une vanne de régulation de pression et/ou de débit, ledit régulateur de pression et/ou de débit étant configuré pour transférer dans le réservoir tampon du gaz à la pression de stockage,
- le circuit comprend une conduite de prélèvement de liquide ayant une extrémité amont raccordée à la partie inférieure du stockage et une extrémité aval raccordée à une entrée du réservoir tampon,
- le circuit comprend un ensemble de vannes d'isolement disposées au niveau de l'entrée et de la sortie du stockage tampon, le système de réchauffage de l'hydrogène comprenant un échange de chaleur entre le fluide contenu dans le stockage tampon et une source chaude telle que l'atmosphère pour vaporiser et augmenter la pression du fluide dans le réservoir tampon lorsque les vannes d'isolement sont fermées, le circuit comprenant en outre un organe de limitation de la pression dans ledit stockage tampon tel qu'une vanne de décharge s'ouvrant au-dessus d'un seuil de pression déterminé,
- le circuit d'approvisionnement comprend une conduite d'alimentation de secours reliant une sortie du réservoir tampon à l'entrée de carburant de la pile à combustible, la conduite d'alimentation de secours comprenant au moins une vanne de régulation de pression et/ de débit configurée pour fournir du gaz à une pression déterminée à la pile,
- la conduite d'alimentation de secours comprend, disposés en série avec la au moins une vanne de régulation de pression et/ de débit : un clapet, un échangeur de chaleur de réchauffage, une soupape de sécurité sensible à la pression pour l'évacuation du gaz à l'extérieur du circuit en cas de pression au-dessus d'un seuil de sécurité,
- la conduite d'alimentation de secours est reliée à l'entrée de carburant de la pile à combustible via un raccordement à une portion de conduite de soutirage de liquide.

L'invention concerne également_un procédé d'approvisionnement en hydrogène d'une pile à combustible utilisant une installation selon l'une quelconque des caractéristiques ci-dessus ou ci-dessous, dans lequel la pile à combustible est alimentée en hydrogène par le stockage, le procédé comprenant une étape de transfert d'hydrogène du stockage vers le réservoir tampon. Selon d'autres particularités possibles :
- l'étape de transfert d'hydrogène du stockage vers le réservoir tampon est réalisée lors d'une interruption de l'alimentation de la pile en hydrogène par le stockage, notamment lors d'un arrêt de la pile à combustible,
- le procédé comporte, lors du fonctionnement de la pile à combustible, une étape de détection d'un défaut d'alimentation de la pile à combustible en hydrogène par le stockage, et en réponse, une étape d'alimentation de secours dans laquelle la pile à combustible est alimentée en hydrogène par le réservoir tampon.

L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :
[Fig. 1] représente une vue schématique et partielle illustrant la structure et le fonctionnement d'un premier exemple de réalisation d'une installation selon l'invention,
[Fig. 2] représente une vue schématique et partielle illustrant un exemple de variation de pression possible au sein du stockage cryogénique le l'installation,
[Fig. 3] représente une vue schématique et partielle illustrant la structure et le fonctionnement d'un deuxième exemple de réalisation d'une installation selon l'invention,
[Fig. 4] représente une vue schématique et partielle illustrant la structure et le fonctionnement d'un troisième exemple de réalisation d'une installation selon l'invention,
[Fig. 5] représente une vue schématique et partielle illustrant la structure et le fonctionnement d'un quatrième exemple de réalisation d'une installation selon l'invention,
[Fig. 6] représente une vue schématique et partielle illustrant la structure et le fonctionnement d'un cinquième exemple de réalisation d'une installation selon l'invention.
[Fig. 7] représente une vue schématique et partielle illustrant la structure et le fonctionnement d'un sixième exemple de réalisation d'une installation selon l'invention.

L'installation 1 d'approvisionnement en hydrogène d'une pile à combustible comprend une pile 2 à combustible, un stockage 3 d'hydrogène liquéfié et un circuit 4, 14 d'approvisionnement comprenant au moins une extrémité amont reliée au stockage 3 et une extrémité aval reliée à une entrée de carburant de la pile 2 à combustible.

Le circuit 4, 14 comprenant un système 5, 15 de réchauffage de l'hydrogène par échange de chaleur avec une source chaude et un ensemble de vannes 6, 16, 26 de contrôle.

Le stockage 3 d'hydrogène liquéfié est configuré pour conserver de l'hydrogène liquéfié en équilibre avec une phase gazeuse à une pression nominale de stockage déterminée relativement basse comprise entre 1,5 et 4,5 bar par exemple.

Le circuit 4, 14 d'approvisionnement comporte un réservoir 7 tampon d'hydrogène gazeux sous pression configuré pour stocker de l'hydrogène soutiré du stockage 3 et réchauffé par le système 5, 15 de réchauffage. L'ensemble de vannes est configuré pour accumuler du gaz sous pression dans le réservoir 7 tampon à une pression de stockage déterminée relativement haute, comprise entre 4 et 100 bar, par exemple entre 6 et 8 bar.

Le circuit d'approvisionnement comprend une conduite 4 de soutirage de liquide reliant la partie inférieure du stockage 3 à l'entrée de carburant de la pile 2 à combustible.

La conduite 4 de soutirage de liquide comprend, disposés en série : un premier échangeur 5 de chaleur de réchauffage (ou évaporateur) et une première vanne 6 de régulation de pression et/ou de débit. Cette première vanne 6 de régulation de pression et/ou de débit est configurée pour alimenter l'entrée de carburant de la pile 2 à combustible à une pression d'utilisation déterminée comprise par exemple entre 1 et 3 bar abs. Cette alimentation en hydrogène à partir du stockage 3 liquide constitue le fonctionnement dit normal, lorsque la pile 2 à combustible est en état de fonctionnement.

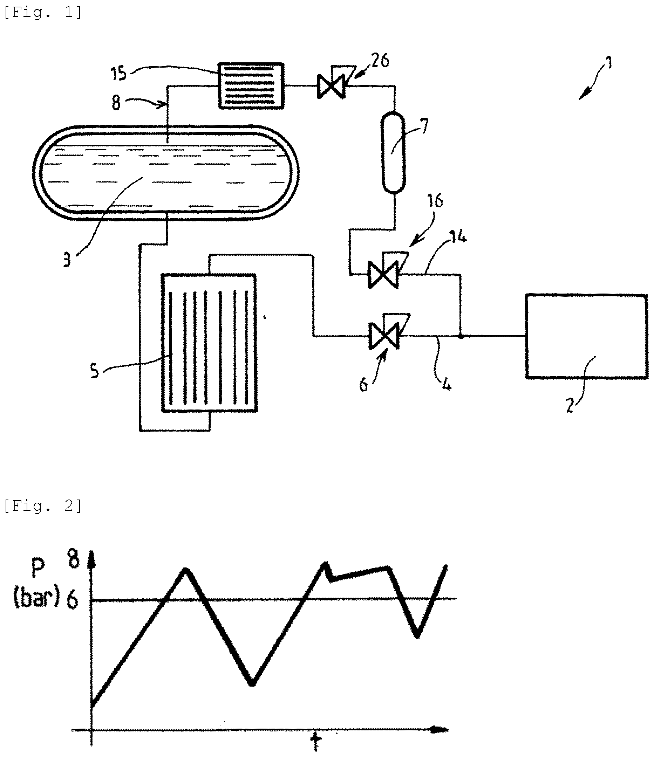

Dans le mode de réalisation de la [Fig. 1], le circuit comprend une conduite 8 de soutirage de gaz reliant la partie supérieure du stockage 3 à une entrée du réservoir 7 tampon. La conduite 8 de soutirage de gaz comprend, disposés en série : un second échangeur 15 de chaleur de réchauffage de l'hydrogène gazeux et une seconde vanne 26 de régulation de pression et/ou de débit. Le second échangeur 15 de chaleur est par exemple un réchauffeur atmosphérique qui amène l'hydrogène gazeux prélevé à une température de 22K à 100K.

La seconde vanne 26 de régulation de pression et/ou de débit est quant à elle configurée pour transférer dans le réservoir 7 tampon du gaz à la pression de stockage par exemple entre 5 et 8 bar.

La seconde vanne 26 de régulation de pression et/ou de débit (et/ou un système de clapet approprié non représenté, par exemple au moins un clapet anti-retour) peut être configuré pour transférer de façon automatique du gaz sous pression du stockage 3 vers le réservoir 7 tampon et de préférence uniquement lorsque la pression dans le stockage 3 excède un seuil de pression déterminé.

En effet, notamment dans les phases dans lesquelles la pile 2 à combustible n'est pas alimentée par le stockage 3 pendant des durées relativement prolongée, le stockage 3 a tendance à s'auto-pressuriser. Sa pression interne peut en particulier atteindre des seuils supérieurs à 5 bar. Cette pression diminue dès que de l'hydrogène est soutiré dans le ciel gazeux.

La [Fig. 2] illustre un exemple de variation de pression P (en bar) dans le stockage 3 en fonction du temps t. Comme illustré, la pression peut décrire des rampes montantes en cas d'auto-pressurisation par exemple et des rampes descendantes (en cas de soutirage par exemple). La seconde vanne 26 de régulation peut par exemple être configurée (réglée, dimensionnée, tarée ou pilotée) pour s'ouvrir lorsque la pression en amont est supérieure à un seuil d'ouverture (par exemple 6 bar) et pour se refermer lorsque la pression en amont est inférieure à ce seuil d'ouverture (ou un autre seuil de pression).

Ceci permet de transférer, de préférence de façon automatique, du gaz du stockage 3 vers le réservoir 7 tampon et de préférence uniquement lorsque la pression dans le stockage 3 excède un seul de pression déterminé.

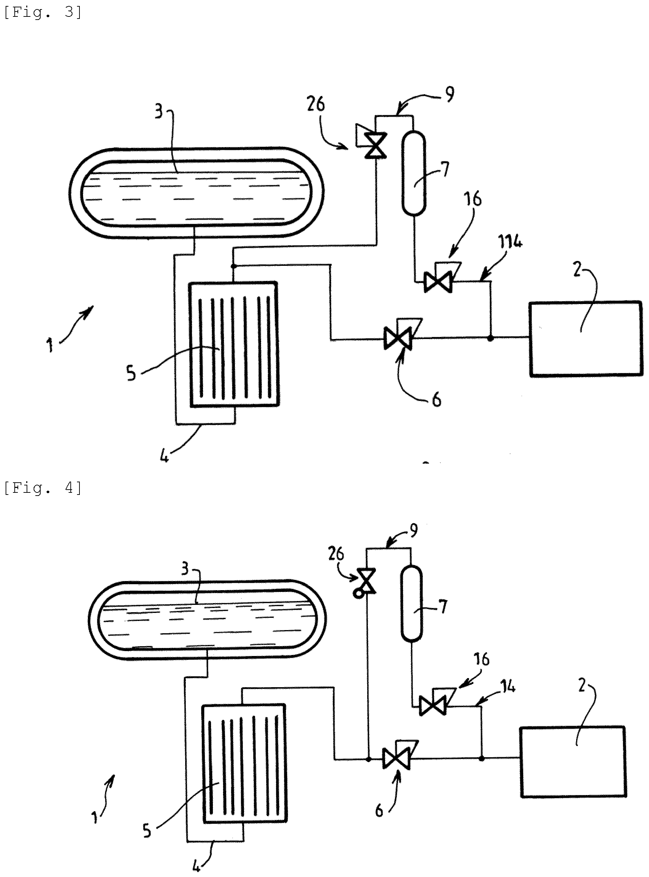

Dans le mode de réalisation de la [Fig. 3], le circuit comprend une conduite 9 de remplissage de gaz ayant une extrémité amont raccordée à une sortie du premier échangeur 5 de chaleur de réchauffage et une extrémité aval reliée à une entrée du réservoir 7 tampon. Cette conduite 9 de remplissage de gaz comprend une seconde vanne 26 de régulation de pression et/ou de débit, ladite seconde vanne 26 de régulation de pression et/ou de débit étant configurée pour transférer dans le réservoir 7 tampon du gaz à la pression de stockage après son passage dans le premier échangeur 5 de chaleur de réchauffage.

C'est-à-dire que le remplissage du réservoir 7 tampon peut être contrôlé par un détendeur 26 sur une ligne de dérivation de la conduite 4 de soutirage de liquide, en aval du premier échangeur 5 de chaleur de réchauffage.

Ce détendeur 26 (ou une vanne ou clapet équivalent cf. ci-après) peut être activé en particulier lorsque l'alimentation en hydrogène vers la pile 2 à combustible est coupée. Dans ce cas, l'alimentation en hydrogène gazeux de la pile 2 à combustible peut être réalisé par le réservoir 7 tampon via une troisième vanne 16 de régulation de pression et/ou de débit en aval (dont la sortie peut être reliée à la portion aval de la conduite 4 de soutirage de liquide qui est raccordée à l'entrée de carburant de la pile 2 à combustible).

Le mode de réalisation de la [Fig. 4], se distingue de celui de la [Fig. 3] en ce que le détendeur 26 est remplacé par une simple vanne ou clapet. A noter que, tout comme dans le mode de réalisation de la [Fig. 3], l'entrée du réservoir 7 tampon pourrait être relié à la partie supérieure du stockage 3 pour récupérer le gaz de vaporisation (au lieu du gaz issu de la vaporisation de liquide dans l'échangeur 5 de chaleur).

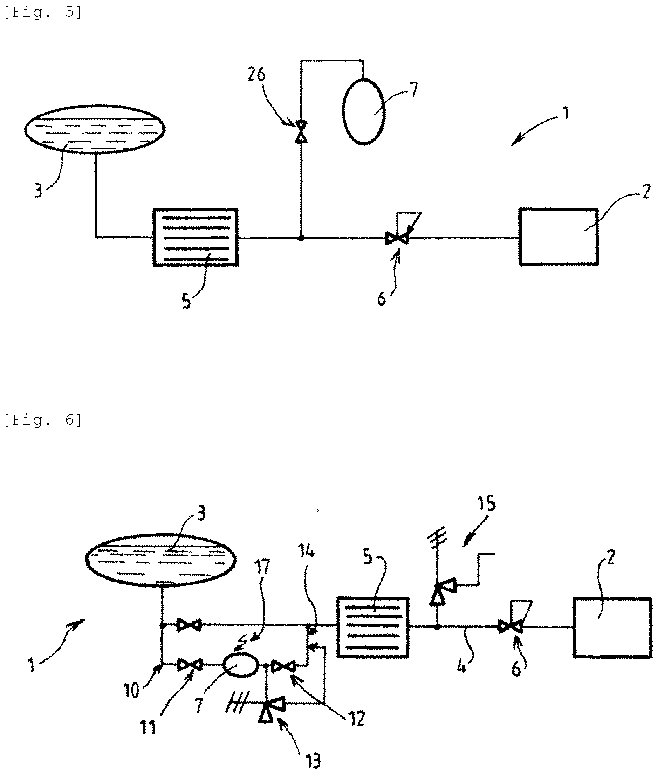

Le mode de réalisation de la [Fig. 5], se distingue de celui de la [Fig. 3] en ce que l'entrée et la sortie du réservoir 7 tampon sont confondues. Le remplissage du réservoir 7 tampon ou le soutirage de gaz du réservoir tampon 7 sont contrôlés par une seconde vanne de régulation ou clapet reliée à la conduite 4 de soutirage liquide, par exemple en aval du premier échangeur 5 de chaleur de réchauffage et en amont de la première vanne 6 de régulation de pression et/ou de débit.

Le remplissage du réservoir 7 tampon peut être en particulier contrôlé par la seconde vanne 26 qui peut être automatiquement ouverte dès que la pression dans le stockage 3 est supérieure à un seuil haut. Cette seconde vanne 26 peut aussi être ouverte automatiquement lorsque l'alimentation normale en hydrogène de la pile 2 à combustible est coupée (par exemple par manque de liquide dans le stockage).

Dans le mode de réalisation de la [Fig. 6], le circuit comprend une conduite 10 de prélèvement de liquide ayant une extrémité amont raccordée à la partie inférieure du stockage 3 et une extrémité aval raccordée à une entrée du réservoir 7 tampon. Comme illustré, cette conduite 10 de prélèvement de liquide peut être une dérivation de la partie amont de la conduite 4 de soutirage de liquide.

Dans ce mode de réalisation, le circuit comprend un ensemble de vannes 11, 12 d'isolement disposées au niveau de l'entrée et de la sortie du stockage 7 tampon. Un réchauffage de possible de l'hydrogène comprend un échange de chaleur entre le fluide contenu dans le stockage 7 tampon et une source chaude telle que l'atmosphère pour vaporiser et augmenter la pression du fluide dans le réservoir 7 tampon lorsque les vannes 11, 12 d'isolement sont fermées et emprisonnent du fluide dans le réservoir 7 tampon. De plus, le circuit comprendt de préférence en outre un organe 13 de limitation de la pression dans ledit stockage 7 tampon tel qu'une vanne de décharge raccordée au réservoir 7 et s'ouvrant au-dessus d'un seuil de pression déterminé.

Dans cette configuration, le réservoir 7 tampon peut ainsi être rempli par du liquide cryogénique en amont du premier échangeur 5 de chaleur de réchauffage via l'ouverture de la vanne 11 d'isolement amont (et éventuellement la vanne 12 d'isolement aval). Lorsque le réservoir 7 tampon est rempli et de préférence froid (température par exemple comprise entre 25 et 150K), les vannes d'isolement 11, 12 peuvent être fermées. Le liquide emprisonné va s'évaporer du fait des entrées thermiques (éventuellement également via un réchauffage actif) ; la pression augmente dans le réservoir 7 tampon. Une éventuelle surpression peut être évacuée par la vanne 13 de décharge (qui peut rester fermée lors d'un remplissage du réservoir 17 tampon à pression constante). La pression dans le réservoir 7 tampon est par exemple amenée à une valeur comprise entre 6 et 100 bar et constitue ainsi une réserve d'hydrogène sous pression pour alimenter la pile 2 à combustible en cas de défaillance de l'alimentation normale (par exemple via l'ouverture de la vanne 12 d'isolement aval.

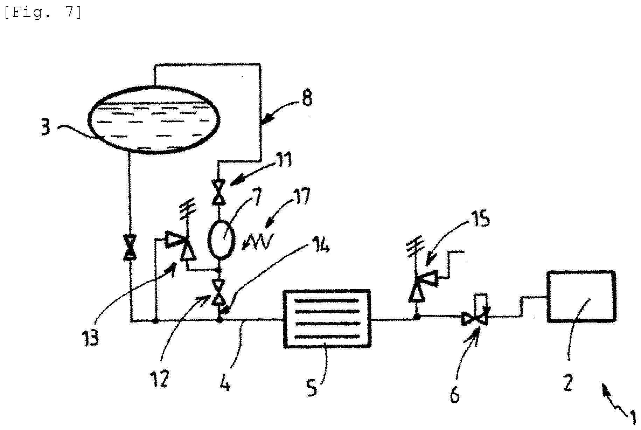

Le mode de réalisation de la [Fig. 7], se distingue de celui de la [Fig. 6] en ce que l'entrée du réservoir 7 tampon est reliée à la partie supérieure du stockage 3 via une conduite 8 de soutirage de gaz.

Le remplissage du réservoir 7 tampon peut ainsi être réalisé en amont du premier échangeur 5 de chaleur de réchauffage en ouvrant la vanne d'isolement 11 amont et éventuellement la seconde vanne 12 d'isolement. Le réservoir 7 tampon est rempli de gaz froid du stockage 3. Le reste du processus peut être identique à celui décrit précédemment en liaison avec la [Fig. 6].

Ainsi, dans la configuration normale le stockage 3 peut être maintenu à une pression relativement basse (inférieure à 5 bar par exemple) et alimente la pile 2 à combustible à une pression comprise entre 1 et 5 bar via une évaporation et une régulation de pression. La surpression éventuelle et temporaire dans le stockage 3 peut être utilisée pour remplir le réservoir 7 tampon à une pression supérieure (5 bar ou plus par exemple). Cette réserve 7 de gaz sous pression est utilisable pour l'alimentation en hydrogène de la pile 2 à combustible si l'alimentation normale n'est pas disponible. Dans les configurations des [Fig. 6] et [Fig. 7], la pression dans le réservoir tampon 7 peut être amenée jusqu'à plus de 200 bar par simple réchauffement du liquide/gaz froid emprisonné dans le réservoir 7 lorsque les vannes 11 et 12 sont fermées.

Ceci permet de continuer à alimenter la pile 2 à combustible par exemple le temps que le système de mise en pression du stockage 3 n'y rétablisse la pression nominale d'utilisation de l'hydrogène.

L'installation peut ainsi profiter des phases d'utilisation du stockage 3 en auto-pressurisation (pile non activée) durant lesquelles la pression dans le stockage 3 peut monter à une pression supérieure à 5 bar pour remplir un réservoir 7 tampon. Comme illustré dans les exemples non limitatifs, l'hydrogène utilisé pour remplir le réservoir 7 tampon peut être prélevé directement au niveau le ciel gazeux (partie supérieure du stockage), en amont et/ou en aval du ou des échangeurs de chaleur de réchauffage 5, 15.

## Revendications

1. Installation d'approvisionnement en hydrogène d'une pile à combustible, l'installation (1) comprenant une pile (2) à combustible, un stockage (3) d'hydrogène liquéfié et un circuit (4, 14) d'approvisionnement comprenant au moins une extrémité amont reliée au stockage (3) et une extrémité aval reliée à une entrée de carburant de la pile (2) à combustible, le circuit (4, 14) d'approvisionnement comprenant au moins un système (5, 15, 17) de réchauffage de l'hydrogène par échange de chaleur avec une source chaude et un ensemble de vannes (6, 16, 26) de contrôle, le stockage (3) d'hydrogène liquéfié étant configuré pour conserver de l'hydrogène liquéfié en équilibre avec une phase gazeuse à une pression de stockage nominale déterminée comprise entre 1,5 et 4,5 bar , **caractérisée en ce que** le circuit (4, 14) d'approvisionnement comporte un réservoir (7) tampon d'hydrogène gazeux sous pression configuré pour stocker de l'hydrogène soutiré du stockage (3) et réchauffé par le système (5, 15, 17) de réchauffage, l'ensemble de vannes étant configuré pour accumuler du gaz sous pression dans le réservoir (7) tampon à une pression de stockage déterminée comprise entre 4 et 100 bar, par exemple entre 6 et 8 bar, et **en ce que** le circuit d'approvisionnement comprend une conduite (4) de soutirage de liquide reliant la partie inférieure du stockage (3) à l'entrée de carburant de la pile (2) à combustible, la conduite (4) de soutirage de liquide comprenant, disposés en série : un premier échangeur (5) de chaleur de réchauffage, une première vanne de régulation (6) de pression et/ou de débit, ladite première vanne (6) de régulation de pression et/ou de débit étant configurée pour alimenter l'entrée de carburant de la pile (2) à combustible à une pression d'utilisation déterminée comprise entre 1 et 3 bar.

2. Installation selon la revendication 1, **caractérisée en ce que** le circuit comprend une conduite (8) de soutirage de gaz reliant la partie supérieure du stockage (3) à une entrée du réservoir (7) tampon.

3. Installation selon la revendication 2, **caractérisée en ce que**, la conduite (8) de soutirage de gaz comprend, disposés en série : un échangeur (5, 15) de chaleur de réchauffage de l'hydrogène gazeux, une vanne (26) de régulation de pression et/ou de débit, ladite vanne (26) de régulation de pression et/ou de débit étant configurée pour transférer dans le réservoir (7) tampon du gaz à la pression de stockage.

4. Installation selon la revendication 3, **caractérisée en ce que** la vanne (26) de régulation de pression et/ou de débit est configurée pour transférer de façon automatique du gaz du stockage (3) vers le réservoir (7) tampon et uniquement lorsque la pression dans le stockage (3) excède un seuil de pression déterminé.

5. Installation selon la revendication 1, **caractérisée en ce que** le circuit comprend une conduite (9) de remplissage de gaz ayant une extrémité amont raccordée à une sortie du premier échangeur (5) de chaleur de réchauffage et une extrémité aval reliée à une entrée du réservoir (7) tampon, la conduite (9) de remplissage de gaz comprenant une vanne (26) de régulation de pression et/ou de débit, ledit régulateur (26) de pression et/ou de débit étant configuré pour transférer dans le réservoir (7) tampon du gaz à la pression de stockage.

6. Installation selon la revendication 1, **caractérisée en ce que** le circuit comprend une conduite (10) de prélèvement de liquide ayant une extrémité amont raccordée à la partie inférieure du stockage (3) et une extrémité aval raccordée à une entrée du réservoir (7) tampon.

7. Installation selon la revendication 2 ou 6, **caractérisée en ce que**, le circuit comprend un ensemble de vannes (11, 12) d'isolement disposées au niveau de l'entrée et de la sortie du stockage (7) tampon, le système de réchauffage de l'hydrogène comprenant un échange de chaleur entre le fluide contenu dans le stockage (7) tampon et une source chaude telle que l'atmosphère pour vaporiser et augmenter la pression du fluide dans le réservoir (7) tampon lorsque les vannes (11, 12) d'isolement sont fermées, le circuit comprenant en outre un organe (13) de limitation de la pression dans ledit stockage (7) tampon tel qu'une vanne de décharge s'ouvrant au-dessus d'un seuil de pression déterminé.

8. Installation selon l'une quelconque des revendications 1 à 7, **caractérisée en ce que** le circuit d'approvisionnement comprend une conduite (14) d'alimentation de secours reliant une sortie du réservoir (7) tampon à l'entrée de carburant de la pile (2) à combustible, la conduite (14) d'alimentation de secours comprenant au moins une vanne (6, 16) de régulation de pression et/ de débit configurée pour fournir du gaz à une pression déterminée à la pile (2).

9. Installation selon les revendications 7 et 8 prises en combinaison, **caractérisée en ce que** la conduite (14) d'alimentation de secours comprend, disposés en série avec la au moins une vanne (6) de régulation de pression et/ de débit : un clapet, un échangeur (5) de chaleur de réchauffage, une soupape (15) de sécurité sensible à la pression pour l'évacuation du gaz à l'extérieur du circuit en cas de pression au-dessus d'un seuil de sécurité.

10. Installation selon la revendication 8 ou 9, **caractérisée en ce que** la conduite (14) d'alimentation de secours est reliée à l'entrée de carburant de la pile (2) à combustible via un raccordement à une portion de conduite (4) de soutirage de liquide.

11. Procédé d'approvisionnement en hydrogène d'une pile à combustible utilisant une installation selon l'une quelconque des revendications 1 à 10, dans lequel la pile (2) à combustible est alimentée en hydrogène par le stockage (3), le procédé comprenant une étape de transfert d'hydrogène du stockage (3) vers le réservoir (7) tampon.

12. Procédé selon la revendication 11, **caractérisé en ce que** l'étape de transfert d'hydrogène du stockage (3) vers le réservoir (7) tampon est réalisée lors d'une interruption de l'alimentation de la pile (2) en hydrogène par le stockage (3), notamment lors d'un arrêt de la pile (2) à combustible.

13. Procédé selon la revendication 11 ou 12, **caractérisé en ce qu'**il comporte, lors du fonctionnement de la pile (2) à combustible, une étape de détection d'un défaut d'alimentation de la pile (2) à combustible en hydrogène par le stockage (3), et en réponse, une étape d'alimentation de secours dans laquelle la pile (2) à combustible est alimentée en hydrogène par le réservoir (7) tampon.

## Patentansprüche

1. Anlage zur Versorgung einer Brennstoffzelle mit Wasserstoff, wobei die Anlage (1) eine Brennstoffzelle (2), einen Speicher (3) für Flüssigwasserstoff und einen Versorgungskreislauf (4, 14) umfasst, der mindestens ein mit dem Speicher (3) verbundenes stromaufwärtiges Ende und ein mit einem Brennstoffeinlass der Brennstoffzelle (2) verbundenes stromabwärtige Ende umfasst, wobei der Versorgungskreislauf (4, 14) mindestens ein System (5, 15, 17) zum Erhitzen des Wasserstoffs durch Wärmetausch mit einer Wärmequelle und eine Anordnung von Steuerventilen (6, 16, 26) umfasst, wobei der Flüssigwasserstoffspeicher (3) dazu ausgelegt ist, Flüssigwasserstoff im Gleichgewicht mit einer Gasphase bei einem bestimmten nominalen Speicherdruck zwischen 1,5 und 4,5 bar zu speichern, **dadurch gekennzeichnet, dass** der Versorgungskreislauf (4, 14) einen Pufferbehälter (7) für unter Druck stehenden gasförmigen Wasserstoff umfasst, der dazu ausgelegt ist, aus dem Speicher (3) entnommenen und durch das Aufheizsystem (5, 15, 17) aufgeheizten Wasserstoff zu speichern, wobei die Ventilanordnung dazu ausgelegt ist, unter Druck stehendes Gas im Pufferbehälter (7) bei einem bestimmten Speicherdruck zwischen 4 und 100 bar, beispielsweise zwischen 6 und 8 bar, zu speichern, und dass der Versorgungskreislauf eine Flüssigkeitsentnahmeleitung (4) umfasst, die den unteren Teil des Speichers (3) mit dem Brennstoffeinlass der Brennstoffzelle (2) verbindet, wobei die Flüssigkeitsentnahmeleitung (4) in Reihe angeordnet Folgendes umfasst: einen ersten Aufheizwärmetauscher (5), ein erstes Druck- und/oder Durchflussregelventil (6), wobei das erste Druck- und/oder Durchflussregelventil (6) dazu ausgelegt ist, den Brennstoffeinlass der Brennstoffzelle (2) mit einem bestimmten Betriebsdruck zwischen 1 und 3 bar zu versorgen.

2. Anlage nach Anspruch 1, **dadurch gekennzeichnet, dass** der Kreislauf eine Gasentnahmeleitung (8) umfasst, die den oberen Teil des Speichers (3) mit einem Einlass des Pufferbehälters (7) verbindet.

3. Anlage nach Anspruch 2, **dadurch gekennzeichnet, dass** die Gasentnahmeleitung (8) in Reihe angeordnet Folgendes umfasst: einen Wärmetauscher (5, 15) zum Erwärmen des gasförmigen Wasserstoffs, ein Druck- und/oder Durchflussregelventil (26), wobei das Druck- und/oder Durchflussregelventil (26) dazu ausgelegt ist, Gas mit dem Speicherdruck in den Pufferbehälter (7) zu überführen.

4. Anlage nach Anspruch 3, **dadurch gekennzeichnet, dass** das Druck- und/oder Durchflussregelventil (26) dazu ausgelegt ist, Gas aus dem Speicher (3) automatisch in den Pufferbehälter (7) zu überführen, und zwar nur dann, wenn der Druck im Speicher (3) einen bestimmten Druckschwellenwert überschreitet.

5. Anlage nach Anspruch 1, **dadurch gekennzeichnet, dass** der Kreislauf eine Gasfüllleitung (9) mit einem an einen Auslass des ersten Aufheizwärmetauschers (5) angeschlossenen stromaufwärtigen Ende und einem mit einem Einlass des Pufferbehälters (7) verbundenen stromabwärtigen Ende umfasst, wobei die Gasfüllleitung (9) ein Druck- und/oder Durchflussregelventil (26) umfasst, wobei der Druck- und/oder Durchflussregler (26) dazu ausgelegt ist, Gas mit dem Speicherdruck in den Pufferbehälter (7) zu überführen.

6. Anlage nach Anspruch 1, **dadurch gekennzeichnet, dass** der Kreislauf eine Flüssigkeitsentnahmeleitung (10) mit einem an den unteren Teil des Speichers (3) angeschlossenen stromaufwärtigen Ende und einem an einen Einlass des Pufferbehälters (7) angeschlossenen stromabwärtigen Ende umfasst.

7. Anlage nach Anspruch 2 oder 6, **dadurch gekennzeichnet, dass** der Kreislauf eine Anordnung von Absperrventilen (11, 12) umfasst, die am Einlass und am Auslass des Pufferbehälters (7) angeordnet sind, wobei das System zur Wasserstofferwärmung einen Wärmeaustausch zwischen dem im Pufferbehälter (7) enthaltenen Fluid und einer Wärmequelle wie der Atmosphäre umfasst, um das Fluid im Pufferbehälter (7) zu verdampfen und seinen Druck zu erhöhen, wenn die Absperrventile (11, 12) geschlossen sind, wobei der Kreislauf ferner ein Organ (13) zur Begrenzung des Drucks im Pufferbehälter (7) umfasst, wie etwa ein Entlastungsventil, das sich oberhalb einer bestimmten Druckschwelle öffnet.

8. Anlage nach einem der Ansprüche 1 bis 7, **dadurch gekennzeichnet, dass** der Versorgungskreislauf eine Notversorgungsleitung (14) umfasst, die einen Auslass des Pufferbehälters (7) mit dem Brennstoffeinlass der Brennstoffzelle (2) verbindet, wobei die Notversorgungsleitung (14) mindestens ein Druck- und/oder Durchflussregelventil (6, 16) umfasst, das dazu ausgelegt ist, der Zelle (2) Gas mit einem bestimmten Druck zuzuführen.

9. Anlage nach Anspruch 7 in Kombination mit Anspruch 8, **dadurch gekennzeichnet, dass** die Notversorgungsleitung (14) in Reihe mit dem mindestens einen Druck- und/oder Durchflussregelventil (6) angeordnet Folgendes umfasst: eine Klappe, einen Aufheizwärmetauscher (5), ein druckempfindliches Sicherheitsventil (15) zum Abführen von Gas aus dem Kreislauf bei einem Druck über einem Sicherheitsschwellenwert.

10. Anlage nach Anspruch 8 oder 9, **dadurch gekennzeichnet, dass** die Notversorgungsleitung (14) über eine Verbindung mit einem Abschnitt der Flüssigkeitsentnahmeleitung (4) mit dem Brennstoffeinlass der Brennstoffzelle (2) verbunden ist.

11. Verfahren zur Versorgung einer Brennstoffzelle mit Wasserstoff unter Verwendung einer Anlage nach einem der Ansprüche 1 bis 10, wobei die Brennstoffzelle (2) über den Speicher (3) mit Wasserstoff versorgt wird, wobei das Verfahren einen Schritt des Überführens von Wasserstoff aus dem Speicher (3) in den Pufferbehälter (7) umfasst.

12. Verfahren nach Anspruch 11, **dadurch gekennzeichnet, dass** der Schritt des Überführens von Wasserstoff aus dem Speicher (3) in den Pufferbehälter (7) bei einer Unterbrechung der Wasserstoffversorgung der Zelle (2) durch den Speicher (3), insbesondere bei einer Abschaltung der Brennstoffzelle (2), erfolgt.

13. Verfahren nach Anspruch 11 oder 12, **dadurch gekennzeichnet, dass** es während des Betriebs der Brennstoffzelle (2) einen Schritt der Detektion eines Fehlers bei der Wasserstoffversorgung der Brennstoffzelle (2) durch den Speicher (3) und als Reaktion darauf einen Schritt der Notversorgung, bei dem die Brennstoffzelle (2) über den Pufferbehälter (7) mit Wasserstoff versorgt wird, umfasst.

## Claims

1. Installation for supplying a fuel cell with hydrogen, the installation (1) comprising a fuel cell (2), a liquefied hydrogen storage facility (3) and a supply circuit (4, 14) comprising at least one upstream end connected to the storage facility (3) and one downstream end connected to a fuel inlet of the fuel cell (2), the supply circuit (4, 14) comprising at least one system (5, 15, 17) for heating hydrogen by heat exchange with a heat source and a set of control valves (6, 16, 26), the liquefied hydrogen storage facility (3) being configured to keep the liquefied hydrogen in equilibrium with a gaseous phase at a determined nominal storage pressure of between 1.5 and 4.5 bar, **characterized in that** the supply circuit (4, 14) includes a buffer tank (7) for pressurized gaseous hydrogen which is configured to store the hydrogen withdrawn from the storage facility (3) and heated by the heating system (5, 15, 17), the set of valves being configured to accumulate pressurized gas in the buffer tank (7) at a determined storage pressure of between 4 and 100 bar, for example between 6 and 8 bar, and **in that** the supply circuit comprises a liquid withdrawal pipe (4) connecting the lower portion of the storage facility (3) to the fuel inlet of the fuel cell (2), the liquid withdrawal pipe (4) comprising, arranged in series: a first heating heat exchanger (5), and a first pressure- and/or flow rate-regulating valve (6), said first pressure- and/or flow rate-regulating valve (6) being configured to feed the fuel inlet of the fuel cell (2) at a determined operating pressure of between 1 and 3 bar.

2. Installation according to Claim 1, **characterized in that** the circuit comprises a gas withdrawal pipe (8) connecting the upper portion of the storage facility (3) to an inlet of the buffer tank (7).

3. Installation according to Claim 2, **characterized in that** the gas withdrawal pipe (8) comprises, arranged in series: a heat exchanger (5, 15) for heating gaseous hydrogen, and a pressure- and/or flow rate-regulating valve (26), said pressure- and/or flow rate-regulating valve (26) being configured to transfer gas at the storage pressure into the buffer tank (7).

4. Installation according to Claim 3, **characterized in that** the pressure- and/or flow rate-regulating valve (26) is configured to automatically transfer gas from the storage facility (3) to the buffer tank (7) only when the pressure in the storage facility (3) exceeds a determined pressure threshold.

5. Installation according to Claim 1, **characterized in that** the circuit comprises a gas filling pipe (9) having an upstream end connected to an outlet of the first heating heat exchanger (5) and a downstream end connected to an inlet of the buffer tank (7), the gas filling pipe (9) comprising a pressure- and/or flow rate-regulating valve (26), said pressure and/or flow rate regulator (26) being configured to transfer gas at the storage pressure into the buffer tank (7).

6. Installation according to Claim 1, **characterized in that** the circuit comprises a liquid removal pipe (10) having an upstream end connected to the lower portion of the storage facility (3) and a downstream end connected to an inlet of the buffer tank (7).

7. Installation according to Claim 2 or 6, **characterized in that** the circuit comprises a set of isolation valves (11, 12) arranged at the inlet and at the outlet of the buffer storage facility (7), the hydrogen heating system comprising an exchange of heat between the fluid contained in the buffer storage facility (7) and a heat source such as the atmosphere for vaporizing and increasing the pressure of the fluid in the buffer tank (7) when the isolation valves (11, 12) are closed, the circuit furthermore comprising an element (13) for limiting the pressure in said buffer storage facility (7) such as a discharge valve which opens above a determined pressure threshold.

8. Installation according to any one of Claims 1 to 7, **characterized in that** the supply circuit comprises a backup feed pipe (14) connecting an outlet of the buffer tank (7) to the fuel inlet of the fuel cell (2), the backup feed pipe (14) comprising at least one pressure- and/or flow rate-regulating valve (6, 16) configured to provide gas at a determined pressure to the cell (2).

9. Installation according to Claims 7 and 8 taken in combination, **characterized in that** the backup feed pipe (14) comprises, arranged in series with the at least one pressure- and/or flow rate-regulating valve (6): a valve shutter, a heating heat exchanger (5), and a pressure-sensitive safety valve (15) for discharging the gas to the outside of the circuit in the event of pressure above a safety threshold.

10. Installation according to Claim 8 or 9, **characterized in that** the backup feed pipe (14) is connected to the fuel inlet of the fuel cell (2) via a connection to a portion of the liquid withdrawal pipe (4) .

11. Method for supplying a fuel cell with hydrogen using an installation according to any one of Claims 1 to 10, wherein the fuel cell (2) is fed with hydrogen by the storage facility (3), the method comprising a step of transferring hydrogen from the storage facility (3) to the buffer tank (7).

12. Method according to Claim 11, **characterized in that** the step of transferring hydrogen from the storage facility (3) to the buffer tank (7) is performed during an interruption to the feeding of the cell (2) with hydrogen by the storage facility (3), in particular during a shutdown of the fuel cell (2).

13. Method according to Claim 11 or 12, **characterized in that** it includes, during the operation of the fuel cell (2), a step of detecting a fault in the feeding of the fuel cell (2) with hydrogen by the storage facility (3) and, in response, a step of backup feeding in which the fuel cell (2) is fed with hydrogen by the buffer tank (7) .
